# DEMANDE DE BREVET EUROPEEN

(11) **EP 0 549 426 A1**
(43) Date de publication de la demande: **30.06.1993**
(21) Numéro de dépôt: 92403451.5
(22) Date de dépôt: 17.12.1992
(51) Int. Cl.: H02K 1/27, H02K 29/08, H02K 29/10

(54) **Rotor à aimants permanents et machine magnéto-dynamique, comme un moteur sans collecteur**

(30) Priorité: 20.12.1991 FR 9115922
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor à aimants permanents doté d'une indication de position. Elle concerne aussi une machine magnéto-dynamique, comme un moteur sans collecteur, ainsi équipée.

Selon l'invention, l'un des bords radiaux du rotor porte une indentation (6-1 - 6-4) venue de matière avec les zones aimantées (5-1- 5-4) du rotor, les indentations défuilant devant un capteur fixe dont le signal de sortie détecte la position angulaire instantanée du rotor par rapport aux alternances de polarités magnétiques.

Application au moteur à commutation électronique.

## Description

La présente invention concerne un rotor à aimants permanents doté d'une indication de position. Elle concerne aussi une machine magnéto-dynamique, comme un moteur sans collecteur, ainsi équipée.

Dans l'art antérieur, on a déjà proposé de monter des aimants permanents en forme de tuiles ou autres sur un corps rotorique. Le corps rotorique est réalisé en matériau amagnétique, et est monté fixe sur un arbre tournant.

Dans de nombreuses applications, le rotor doit être équipé d'un capteur permettant de mesurer au moins la position angulaire instantanée du rotor dans sa rotation par rapport au stator.

C'est le cas notamment du moteur à commutation électronique dans lequel un circuit électronique traite l'information de position angulaire instantanée du rotor et/ou sa vitesse de façon à élaborer des ordres de commutation de l'alimentation de chaque phase des enroulements statoriques en fonction de la position angulaire instantanée du rotor. En fait, il faut que chaque enroulement du stator soit commuté avec une loi de phase en fonction de l'angle fait entre les pôles magnétiques du rotor et les encoches du stator dans lesquelles sont disposées les enroulements statoriques.

Pour atteindre cet objectif, on a proposé dans l'art antérieur de disposer sur le rotor une partie du capteur de mesure, partie sur laquelle on inscrit une information de position angulaire en relation avec la position des pôles magnétiques constitués par les aimants permanents précités.

Cependant, ceci exige d'ajouter une pièce mécanique et de réaliser son installation avec précision par rapport aux pôles magnétiques.

C'est un objet de la présente invention de permettre d'éviter d'avoir à placer avec précision un support de marques ou indications enregistrées par rapport aux zones aimantées, par exemple constituées par des tuiles d'un matériau magnétique.

D'autre part, le support des indications enregistrées doit être équilibré au point de vue des inerties.

C'est un autre objet de la présente invention d'éviter d'avoir à disposer un balourd sur l'arbre de rotation.

D'autre part, l'installation de cette pièce supplémentaire entraîne des problèmes lors du montage au point de vue de son encombrement.

C'est un autre objet de la présente invention de proposer un moyen de remédier à cet inconvénient de l'art antérieur en utilisant un bord radial de la zone aimantée.

En effet, la présente invention concerne un rotor à aimants permanents, caractérisé en ce que les deux bords radiaux opposés d'une même zone aimantée sont dotés d'indentations décalées d'un demi pas d'indentation, qui s'allongent le long de l'arbre du rotor de façon à se placer devant au moins un capteur de position angulaire instantanée du rotor.

L'invention concerne aussi une machine magnéto-dynamique, comme un moteur sans collecteur, comportant un tel rotor.

D'autres caractéristiques et avantages de la présente invention seront mieux comprises à l'aide de la description et des figures annexées qui sont :
la figure 1 : une vue d'un premier mode de réalisation d'un rotor selon l'invention ;
la figure 2 : un schéma expliquant le fonctionnement d'une machine magnéto-dynamique équipée d'un rotor selon le mode de réalisation de la figure 1 ;
la figure 3 : une vue d'un second mode de réalisation d'un moteur selon l'invention ; et,
la figure 4 : un schéma d'un mode de réalisation d'un rotor combiné.

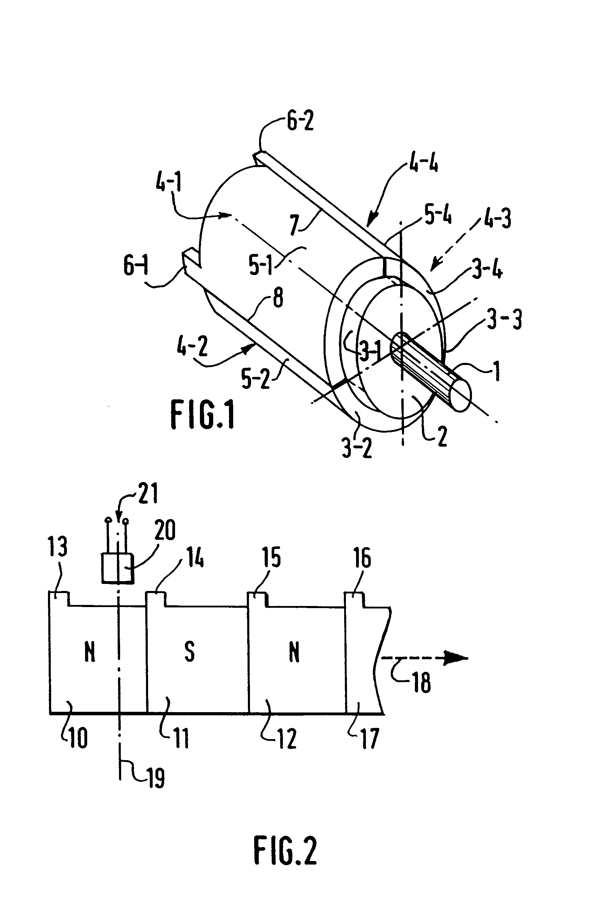

A la figure 1, on a représenté un premier mode de réalisation selon l'invention.

Le rotor comporte un arbre de rotation 1, monté sur un corps rotorique 2 de forme générale cylindrique.

Le corps rotorique 2 comporte une pluralité de surfaces d'appui 3-1, 3-2, ... sur lesquelles chaque face correspondante des tuiles 4-1, 4-2, .... est déposée.

Chaque tuile est réalisée en un matériau magnétique comme une ferrite et présente une face d'appui qui correspond à la surface d'appui correspondante 3-1, 3-2, ... du corps rotorique, chaque tuile présente aussi une face magnétique active 5-1, 5-2,... tournée vers l'extérieur (cas d'un rotor intérieur). Chaque tuile comporte deux bords radiaux dans la direction du plan perpendiculaire à l'axe de l'arbre de rotation 1, même si dans certaines réalisations, ce bord est en fait rectiligne et d'une direction différente à celle du plan orthogonal à l'axe de l'arbre de rotation 1.

Chaque tuile comporte aussi deux bords longitudinaux, comme les bords 7 et 8 à la figure 1, plutôt dans la direction de l'axe de l'arbre de rotation 1. Dans un mode de réalisation représenté aux figures 1 et 2 notamment, ces bords 7 et 8 sont jointifs avec le bord en regard de la tuile adjacente montée sur le corps rotorique.

Dans un autre mode de réalisation, les deux bords en regard de deux tuiles successives sont écartés d'un espace.

Au moins un bord radial d'au moins une tuile 4-1 porte une indentation 6-1. Cette indentation prend la forme d'une saillie qui, dans un mode préféré de réalisation reste dans l'épaisseur de la tuile.

On remarque que l'indentation ou saillie sera préférentiellement réalisé de matière (fabrication "intégrale" ou en une seule pièce) avec le reste de la zone magnétique, par exemple lors de la fabrication de la tuile 4-1 à 4-4. De ce fait, l'indentation prend la même polarité magnétique que le reste de la tuile, sur sa face correspondante. On remarque aussi que la précision de son positionnement par rapport au rotor est égale à la précision dimensionnelle de la tuile.

Il serait possible de rajouter une telle indentation sans s'écarter du concept de l'invention, mais une telle solution ne bénéficie pas de tout l'intérêt de l'invention.

A la figure 2, on a représenté la partie magnétique du rotor de la figure 1 pour expliquer schématiquement son fonctionnement dans une machine magnéto- dynamique comme un moteur sans collecteur.

Le rotor a été représenté "déplié". Il comporte une succession de tuiles 10, 11,12, 17 .... qui présentent vers l'extérieur une succession de pôles alternativement N et S. Le bord supérieur de chaque tuile présente une indentation ou saillie repectivement 13 - 16 dirigée parallèlement à l'axe de rotation 19 du rotor.

Un capteur 20 est disposé, fixe par rapport au rotor, et à proximité du passage des indentations. Dans un mode de réalisation, le capteur 20 est un capteur d'effet magnétique. Dans un mode de réalisation particulier, ce capteur est à effet Hall.

Le défilement d'une saillie 13 devant le capteur engendre un signal de détection, prélevé aux bornes 21 du capteur, qui est maximum quand l'indentation parvient au plus proche du capteur. De ce fait, on détecte avec précision la position angulaire du rotor, directement en relation avec la position des zones aimantées, position qui est le paramètre important pour commander les commutations des enroulements statoriques, notamment dans un moteur à commutation électronique.

Dans un autre mode de réalisation, le capteur 20 est du type optronique. En particulier, il utilise la variation de caractéristiques d'un faisceau lumineux intercepté par une indentation comme les indentations 13 à 16. Dans un mode de réalisation préféré, le capteur optronique comporte une cellule émettrice dont le faisceau est destiné à se réfléchir partiellement sur la face en regard de l'indentation lors de son passage devant le capteur. Le capteur comporte aussi une cellule réceptrice activée par le faisceau réfléchi lors du passage de l'indentation devant le capteur.

Le rayonnement peut être du type rayon de lumière visible ou encore infra -rouge.

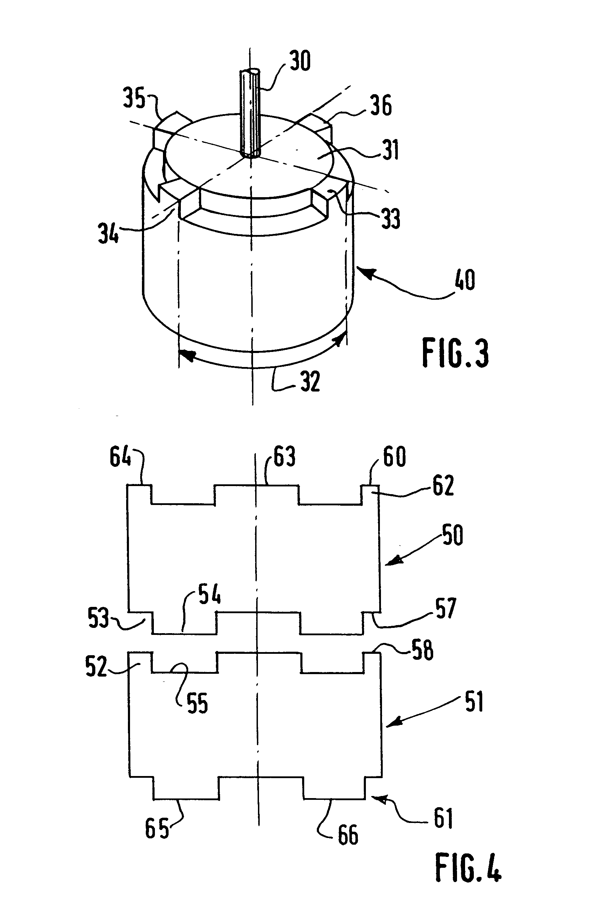

A la figure 3, on a représenté un autre mode de réalisation d'un rotor selon l'invention, dans lequel le rotor comporte aussi un arbre de rotation 30, et un corps rotorique 31. Mais les zones aimantées sont constituées sur un anneau 40, réalisé en un matériau magnétique isotrope comme un mélange Fer- Néodyme- Bore.

Les zones aimantées, comme la zone 32, sont réalisées à l'aide d'une machine connue en soi lors de la fabrication du rotor.

Le bord radial, ici le bord supérieur de l'anneau 40, présente des indentations 33 à 36 liées à chaque zone magnétique. Ces indentations sont réalisées directement lors de la fabrication de l'anneau et peuvent recevoir, du fait du caractère isotrope du matériau, toute aimantation désirée en relation avec le but de fournir une indication de position du rotor.

A la figure 4, on a représenté un montage avantageux, notamment dans le cas des zones aimantées réalisées sur plus d'un anneau. Deux anneaux 50 et 51,identiques de dimensions standard, sont destinés à être empilés sur un corps rotorique. Leur montage est tel que les indentations des bords radiaux correspondants 57 et 58 se correspondent avec un déphasage d'un demi pas entre les indentations. Ainsi, la dent 54 du bord 57 de l'anneau 50 est logée au montage dans le logement 55 constitué par l'espace entre deux indentations successives 52 et 59 de l'anneau 51 sur son bord radial 58.

A la fin du montage, les deux anneaux sont assemblés en une seule piéce magnétique dotée de deux bords radiaux 60 et 61 dont les indentations, respectivement 62, 63 , 64, ... et 65, 66, ... sont de périodes angulaires décalées d'un demi pas d'indentation.

Dans ce mode de réalisation, on dispose deux capteurs de mesure du passage d'une indentation du bord 60 et du passage d'une indentation du bord 61 dont les signaux seront en opposition de phase.

## Revendications

1. Rotor à aimants permanents (1 - 4), caractérisé en ce que les deux bords radiaux (5,8) opposés d'une même zone aimantée (4-1 - 4-4 ; 32) sont dotés d'indentations (64, 54) décalées d'un demi pas d'indentation, qui s'allongent le long de l'arbre (1) du rotor de façon à se placer devant au moins un capteur (20) de position angulaire instantanée du rotor.

2. Rotor selon la revendication 1, caractérisé en ce que les indentations sont réalisées de matière avec la zone aimantée.

3. Rotor selon la revendication 1 ou 2, caractérisé en ce que au moins une zone aimantée est constituée sur une tuile (4-1 à 4-4).

4. Rotor selon la revendication 1 ou 2, caractérisé en ce que les zones aimantées (32) sont constituées sur au moins un anneau magnétique (40).

5. Rotor selon la revendicaction 1, caractérisé en ce que le capteur (20) est un capteur d'effet magnétique, comme un capteur à effet Hall.

6. Rotor selon la revendication 1, caractérisé en ce que le capteur (20) est un capteur de type optronique.

7. Rotor selon la revendication 1, caractérisé en ce qu'il comporte un empilement de zones aimantées alignées le long de l'arbre (1) du rotor de façon à ce que les bords radiaux (57 et 58) correspondants s'imbriquent.

8. Rotor selon la revendication 7, caractérisé en ce qu'au moins un capteur est disposé devant chaque bord radial (60,61) de l'empilement des zones aimantées.

9. Machine magnéto-dynamique, caractérisée en ce qu'elle comporte un rotor selon l'une des revendications précédentes.
